(19) Europäisches Patentamt
European Patent Office
Office européen des brevets

(11) **EP 4 580 238 A1**

(12) **EUROPEAN PATENT APPLICATION**

(43) Date of publication:
**02.07.2025 Bulletin 2025/27**

(21) Application number: **24221960.8**

(22) Date of filing: **19.12.2024**

(51) International Patent Classification (IPC):
*H04W 16/28* (2009.01)    *H04W 84/00* (2009.01)

(52) Cooperative Patent Classification (CPC):
**H04W 16/28; H04W 84/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.12.2023 JP 2023220129**

(71) Applicant: **Softbank Corp.**
**Tokyo 105-7529 (JP)**

(72) Inventors:
• **YABUKI, Ayumu**
**Tokyo (JP)**
• **HOZEN, Toshiki**
**Tokyo (JP)**

(74) Representative: **Michalski Hüttermann & Partner Patentanwälte mbB**
**Kaistraße 16A**
**40221 Düsseldorf (DE)**

(54) **COMMUNICATION SYSTEM, MOBILE OBJECT, BASE STATION, AND PROGRAM**

(57)    [Solution] Provided is a communication system, comprising: a mobile object; and a first base station, wherein the mobile object and the first base station performs mobile communication in such a manner that a product of an antenna gain of a communication antenna on a transmitting end and an antenna gain of a communication antenna on a receiving end in mobile communication using a radio wave with a frequency in a terahertz band between the mobile object and the first base station is proportional to a cosecant raised to a power of two of an elevation/depression angle of the radio wave in a propagation direction, and a mobile object, comprising: a communication antenna used for mobile communication between the mobile object and a base station; and a communication unit that performs mobile communication with the base station by using the communication antenna included in the mobile object in such a manner that a product of an antenna gain of a communication antenna on a transmitting end and an antenna gain of a communication antenna on a receiving end in mobile communication using a radio wave with a frequency in a terahertz band between the mobile object and the base station is proportional to a cosecant raised to a power of two of an elevation/depression angle of the radio wave in a propagation direction. Selected drawing: Fig. 1

FIG.1

**Description**

BACKGROUND

1. TECHNICAL FIELD

The present invention relates to a communication system, a mobile object, a base station, and a program.

2. RELATED ART

Patent Document 1 describes a P-MPFWA system incorporating a base station antenna that suppress reduction of a maximum gain in the horizontal direction as much as possible while allowing expansion of a communication region which has been significantly improved compared to conventional ones in the elevation angle direction.

Prior Art Documents

Patent Document

Patent Document 1: Japanese Patent No. 3761821.

GENERAL DISCLOSURE

According to an embodiment of the present invention, a communication system is provided. The communication system may include a mobile object. The communication system may include a first base station. The mobile object and the first base station may perform mobile communication in such a manner that a product of an antenna gain of a communication antenna on a transmitting end and an antenna gain of a communication antenna on a receiving end in mobile communication using a radio wave with a frequency in a terahertz band between the mobile object and the first base station is proportional to a cosecant raised to a power of two of an elevation/depression angle of the radio wave in a propagation direction.

In the communication system, a receiving power ($P_{RE}$) of the radio wave may satisfy a following numerical expression.

$$P_{RE} = P_{TR} \times G_{TR} \times G_{RE} \times \left( \frac{\lambda}{4\pi h \cosec \theta} \right)^2$$

Here, $P_{TR}$ represents a transmitting power of the radio wave, $G_{TR}$ represents the antenna gain of the communication antenna on a transmitting end, $G_{RE}$ represents the antenna gain of the communication antenna on a receiving end, $\lambda$ represents a wavelength of the radio wave, h represents a height difference between a height of the communication antenna on a transmitting end and a height of the communication antenna on a receiving end, and $\theta$ represents the elevation/depression angle.

In any of the communication systems above, the mobile object may include a first communication antenna having an antenna gain that is proportional to a cosecant raised to a power of one of the elevation/depression angle, and the first base station may include a second communication antenna having an antenna gain that is proportional to a cosecant raised to a power of one of the elevation/depression angle.

In any of the communication systems above, the mobile object may include a first communication antenna having an antenna gain that is omnidirectional relative to the elevation/depression angle, and the first base station may include a second communication antenna having an antenna gain that is proportional to a cosecant raised to a power of two of the elevation/depression angle.

In any of the communication systems above, the mobile object may perform mobile communication, using a radio wave with a frequency lower than a terahertz band, with a second base station having a coverage area that encompasses a coverage area of the first base station, receive, from the second base station, first presence information indicating that the first base station is present within the coverage area of the second base station, and perform mobile communication with the first base station based on the first presence information. In any of the communication systems above, the mobile object may perform data communication using both the mobile communication between the mobile object and the first base station and the mobile communication between the mobile object and the second base station when the mobile object is located at a position which is inside the coverage area of the first base station and inside the coverage area of the second base station. In any of the communication systems above, the mobile object may perform data communication using only the mobile communication between the mobile object and the first base station when the mobile object is located at a position which is inside the coverage area of the first base station and inside the coverage area of the second base station. In any of the communication systems above, the mobile object may be an automobile, and a communication antenna included in the mobile object and used for mobile communication between the mobile object and the first base station may be installed on a back side of a rearview mirror or in a shark fin antenna. In any of the communication systems above, the first base station may form the coverage area along a road or a railroad track. In any of the communication systems above, the first base station may form the coverage area that is linear. In any of the communication systems above, the first base station may be installed in a sign, a traffic light, a signboard, or a utility pole. In any of the communication systems above, the first base station may be installed along a road or a railroad track.

Any of the communication systems above may further includes a notification apparatus, wherein the notification apparatus is arranged outside a coverage area of the first base station and may transmit, to the mobile object by using a radio wave with a frequency in a terahertz band, second presence information indicating that the first base station is present within a predetermined range from the notification apparatus, and the mobile object may perform mobile communication with the first base station based on the second presence information.

According to an embodiment of the present invention, a mobile object is provided. The mobile object may include a communication antenna used for mobile communication between the mobile object and a base station. The mobile object may include a communication unit that performs mobile communication with the base station by using the communication antenna included in the mobile object in such a manner that a product of an antenna gain of a communication antenna on a transmitting end and an antenna gain of a communication antenna on a receiving end in mobile communication using a radio wave with a frequency in a terahertz band between the mobile object and the base station is proportional to a cosecant raised to a power of two of an elevation/depression angle of the radio wave in a propagation direction.

In the mobile object, an antenna gain of the communication antenna included in the mobile object may be proportional to a cosecant raised to a power of one of the elevation/depression angle.

According to an embodiment of the present invention, a program is provided which, when executed by a computer, causes the computer to function as any of the mobile objects.

According to an embodiment of the present invention, a base station is provided. The base station may include a communication antenna used for mobile communication between a mobile object and the base station. The base station may include a communication unit that performs mobile communication with the mobile object by using the communication antenna included in the base station in such a manner that a product of an antenna gain of a communication antenna on a transmitting end and an antenna gain of a communication antenna on a receiving end in mobile communication using a radio wave with a frequency in a terahertz band between the mobile object and the base station is proportional to a cosecant raised to a power of two of an elevation/depression angle of the radio wave in a propagation direction.

In the base station above, an antenna gain of the communication antenna included in the base station may be proportional to a cosecant raised to a power of one of the elevation/depression angle.

According to an embodiment of the present invention, a program is provided which, when executed by a computer, causes the computer to function as any of the base stations.

Note that, the summary clause does not necessarily describe all necessary features of the embodiments of the present invention. In addition, the present invention may also be a sub-combination of the features described above.

BRIEF DESCRIPTION OF THE DRAWINGS

Fig. 1 schematically shows an example of a system 10.
Fig. 2 is a descriptive illustration of a propagation characteristic of a radio wave.
Fig. 3 is a descriptive illustration of an antenna gain of a communication antenna.
Fig. 4 is a descriptive illustration of an exemplary communication state of a mobile object 100.
Fig. 5 is a descriptive illustration of another exemplary communication state of the mobile object 100.
Fig. 6 is a descriptive illustration of another exemplary communication state of the mobile object 100.
Fig. 7 schematically shows another example of the system 10.
Fig. 8 is a descriptive illustration of an exemplary installation position of the communication antenna 150.
FIG. 9 schematically shows an exemplary functional configuration of the mobile object 100.
FIG. 10 schematically shows an exemplary functional configuration of the base station 200.
Fig. 11 is a descriptive illustration of an exemplary processing flow of the system 10.
FIG. 12 schematically shows an exemplary hardware configuration of a computer 1200 functioning as the mobile object 100 or the base station 200.

DESCRIPTION OF EXEMPLARY EMBODIMENTS

In the future, the traffic amount of wireless communication that occurs on roads or railroad tracks is predicted to increase due to the widespread use of connected cars, smartification of trains, or the like. Current network capacity cannot accommodate such traffic demand, and thus coverage areas for roads and railroad tracks need to be built. To build the said coverage area, it is considered to use wideband communication with high-frequency radio waves in millimeter wave bands or terahertz bands in which communication capacity is easier to be secured. However, a radio wave in a millimeter wave band or a terahertz band, which experiences high propagation attenuation, faces difficulty in expanding a coverage distance. According to the system pertaining to the present embodiment, a mechanism is employed, for example, in which a mobile object and a base station perform mobile communication in such a manner that a product of an antenna gain of a communication antenna on a transmitting end and an antenna gain of a communication antenna on a receiving end is proportional to a cosecant raised to a power of two of an elevation/depression angle of a radio wave with a frequency in the terahertz band in a propagation direction.

Hereinafter, the present invention will be described through embodiments of the invention. However, the following embodiments do not limit the invention defined in the claims. In addition, not all of the combinations of features described in the embodiments are essential to the solution of the invention.

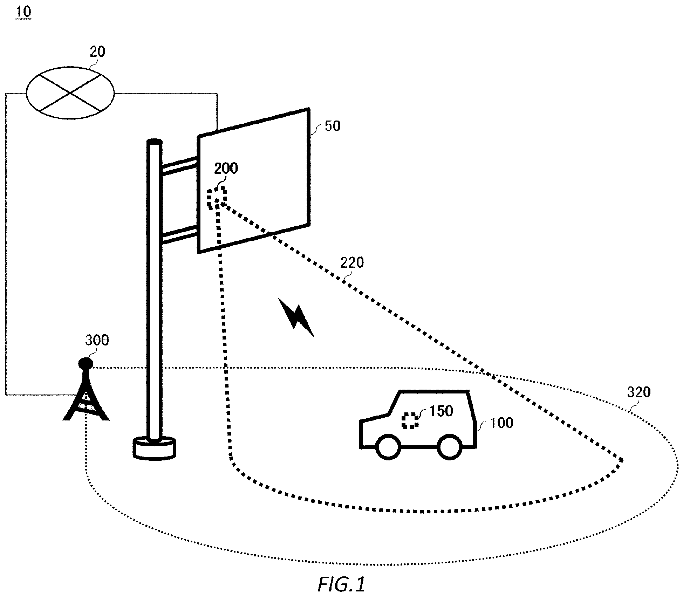

Fig. 1 schematically shows an example of a system 10. The system 10 may include a mobile object 100 and a base station 200. The system 10 may further include a base station 300. The system 10 may be an example of a communication system.

The mobile object 100 may be any mobile object provided that it includes a mobile communication function. For example, the mobile object 100 is a vehicle. The vehicle is an automobile, for example. The vehicle is a two-wheeled vehicle, for example. The vehicle may be a railroad car. The railroad car is a train, for example. The train is a bullet train, for example. Fig. 1 illustrates an exemplary case in which the mobile object 100 is an automobile.

The mobile object 100 performs mobile communication with the base station 200, for example. The mobile object 100 performs mobile communication with the base station 200 using a radio wave with a frequency in a terahertz band, for example. The frequency in the terahertz band may be a frequency in a band between about 100 GHz to about 10 THz. The mobile object 100 may access the network 20 via the base station 200.

The network 20 includes a core network provided by a telecommunication carrier, for example. The core network is compliant with a 5G (5th Generation) communication system, for example. The core network may be compliant with communication systems of 6G (6th Generation) or thereafter, for example. The core network may be compliant with a 3G (3rd Generation) communication system or an LTE (Long Term Evolution) communication system. The network 20 may include the Internet.

The mobile object 100 and the base station 200 perform mobile communication, for example, in such a manner that a product of an antenna gain of a communication antenna on a transmitting end and an antenna gain of a communication antenna on a receiving end in mobile communication using a radio wave with a frequency in the terahertz band between the mobile object 100 and the base station 200 is proportional to a cosecant raised to a power of two of an elevation/depression angle of the radio wave in a propagation direction. For example, when the mobile object 100 includes a communication antenna 150 having an antenna gain that is proportional to a cosecant raised to a power of one of an elevation/-depression angle and the base station 200 includes a communication antenna having an antenna gain that is proportional to a cosecant raised to a power of one of an elevation/depression angle, the product of the antenna gain of the communication antenna on the transmitting end and the antenna gain of the communication antenna on the receiving end in the said mobile communication is proportional to the cosecant raised to a power of two of the elevation/depression angle of the radio wave in the propagation direction. Alternatively, for example, when the mobile object 100 includes a communication antenna 150 having an antenna gain that is omnidirectional relative to an elevation/depression angle and the base station 200 includes a communication antenna having an antenna gain that is proportional to a cosecant raised to a power of two of an elevation/depression angle, the product of the antenna gain of the communication antenna on the transmitting end and the antenna gain of the communication antenna on the receiving end in the said mobile communication is proportional to the cosecant raised to a power of two of the elevation/depression angle of the radio wave in the propagation direction. The base station 200 may be an example of the first base station.

The base station 200 forms a coverage area 220 using the communication antenna, for example. The base station 200 forms the coverage area 220 along a road, for example. The road includes a national road, for example. The national road includes a national expressway, for example. The national road may include general national road. The road includes a prefectural road, for example. The road may include a municipal road. The base station 200 forms the coverage area 220 along a railroad track, for example. The railroad track is a railroad track for a railroad car, for example. The railroad track is a railroad track for a train, for example. The railroad track is a railroad track for a bullet train, for example. The base station 200 may form a linear coverage area 220.

The base station 200 is installed in a sign, for example. The base station 200 is installed in a traffic light, for example. When the base station 200 is installed in the sign or the traffic light, the base station 200 is installed at the height of about 5 m or more. The base station 200 is installed in a signboard, for example. The base station 200 is installed in a utility pole, for example. The base station 200 may be installed in any other location. Fig. 1 illustrates an exemplary case in which the base station 200 is installed in the sign 50.

The base station 200 is installed along a road, for example. The base station 200 may be installed along a railroad track.

For example, two adjacent base stations 200 are installed so that at least part of their coverage areas overlap with each other. Two adjacent base stations 200 may be installed so that their coverage areas do not overlap with each other.

The mobile object 100 performs mobile communication with the base station 300, for example. The mobile object 100 performs mobile communication with the base station 300 using a radio wave with a frequency lower than the terahertz band, for example. The mobile object 100 performs mobile communication with the base station 300 using a radio wave with a frequency in the anchor band, for example. The mobile object 100 performs mobile communication with the base station 300 using a radio wave with a frequency in the 2.1 GHz band, for example. The mobile object 100 may access the network 20 via the base station 300.

The mobile object 100 performs mobile communication with the base station 300 before performing mobile communication with the base station 200, for example. For example, the mobile object 100 establishes mobile communication with the base station 300 at the timing when the mobile object 100 is located at a position which is outside the coverage area 220 of the base station 200 and inside the coverage area 320 of the base station 300.

The mobile object 100 may perform mobile communication with the base station 300 using a communication antenna that is different from the communication antenna 150. Accordingly, the mobile object 100 may include two communication antennas, one of which is the communication antenna 150 to perform mobile communication with the base station 200 and another of which is the communication antenna to perform mobile communication with the base station 300.

The base station 300 forms the coverage area 320 using a communication antenna, for example. The base station 300 forms the coverage area 320 that is wider than the coverage area 220 of the base station 200, for example. The base station 300 forms the coverage area 320 that encompasses the coverage area 220 of the base station 200, for example. The base station 300 may be an example of the second base station.

The base station 300 performs configuration processing for the mobile object 100 to start data communication at the timing when it establishes mobile communication with the mobile object 100, for example. The base station 300 performs subscriber authentication processing to authenticate subscriber information of the mobile object 100, for example. The base station 300 performs assignment processing to assign an IP (Internet Protocol) address to the mobile object 100, for example. The base station 300 may perform any other processing.

After establishing mobile communication with the mobile object 100, the base station 300 transmits presence information indicating that the base station 200 is present within the coverage area 320 of the base station 300, for example. The presence information includes communication antenna information indicating a communication antenna included in the base station 200, for example.

The mobile object 100 may receive the presence information from the base station 300 and perform mobile communication with the base station 200 based on the received presence information. In order to establish mobile communication with the base station 200, the mobile object 100 puts the communication antenna 150 into a state in which it can receive a radio wave, for example.

The mobile object 100 performs data communication using both the mobile communication between the mobile object 100 and the base station 200 and the mobile communication between the mobile object 100 and the base station 300 when the mobile object 100 is located at a position which is inside the coverage area 220 of the base station 200 and inside the coverage area 320 of the base station 300, for example. The mobile object 100 performs the said data communication using a protocol for carrier aggregation, for example. The mobile object 100 may perform data communication using only the mobile communication between the mobile object 100 and the base station 200 when the mobile object 100 is located at a position which is inside the coverage area 220 of the base station 200 and inside the coverage area 320 of the base station 300.

To build the coverage area for roads and railroad tracks for which a future increase in the traffic amount is predicted, it is considered to use wideband communication with high-frequency radio waves in the terahertz band. However, a radio wave in the terahertz band, which experiences high propagation attenuation, faces difficulty in expanding a coverage distance. In addition, it is considered to introduce beamforming to expand a coverage distance of the mobile communication using radio waves in the terahertz band. However, beamforming is a technique not for extending the coverage area itself but for expanding the coverage distance by causing a beam, which forms spots where communication is available, to track a mobile object equipped with a mobile communication function. Hence, in order to cause the beam to track the mobile object with high accuracy, the base station needs to perform a huge amount of operations including a matrix operation in accordance with the movement of the mobile object. In particular, when the mobile object is moving at a high velocity, such as when an automobile is traveling on a highway at a high velocity, the base station needs to perform the said operations even faster. Accordingly, if the beamforming is used to expand the coverage distance of the mobile communication using a radio wave in the terahertz band, the base station needs to be equipped with hardware that satisfies high arithmetic processing requirements, resulting in an increase in size and cost of the base station.

In contrast, according to the system 10 pertaining to the present embodiment, the mobile object 100 and the base station 200 perform mobile communication in such a manner that a product of the antenna gain of the communication antenna on the transmitting end and the antenna gain of the communication antenna on the receiving end in mobile communication using a radio wave with a frequency in the terahertz band between the mobile object 100 and the base station 200 is proportional to a cosecant raised to a power of two of an elevation/depression angle of the radio wave in a propagation direction. By equipping the base station 200 with a cosecant directional antenna and forming the coverage area 220 along a road or a railroad track using the cosecant directional antenna, the system 10 pertaining to the present embodiment can expand the coverage distance of the mobile communication using a radio wave in the terahertz band without introducing beamforming, compared to a conventional coverage distance of the mobile communication using a radio wave in the terahertz band. For example, the system 10 pertaining to the present embodiment can expand the coverage distance of mobile communication using a radio wave in the terahertz band to the extent of 200 m. In addition, the system 10 pertaining to the present embodiment can cause the receiving power of the communication antenna on the receiving end to be constant when the mobile object moves with its communication antenna at a constant height, by performing mobile communication in such a manner that a product of the antenna gain of the communication antenna on the transmitting end and the antenna gain of the communication antenna on the receiving end is proportional to a cosecant raised to a power of two of an elevation/depression angle of the radio wave in a propagation direction. Thus, the system 10 pertaining to the present embodiment can achieve further stabilization of the communication quality of the mobile communication using a radio wave in the terahertz band. In addition, by forming the coverage area along a road or a railroad track, the system 10 pertaining to the present embodiment can suppress occurrences of radio wave interference between a radio wave within one coverage area and a radio wave within another coverage area when the coverage areas are respectively formed for the adjacent car lanes or railroad tracks. As described above, by using the low-cost and compact base station, the system 10 pertaining to the present embodiment can achieve expansion of the coverage distance of mobile communication using a radio wave in the terahertz band and further stabilization of the communication quality of the said mobile communication.

Moreover, according to the system 10 pertaining to the present embodiment, the mobile object 100 performs mobile communication with the base station 300 which has the coverage area 320 encompassing the coverage area 220 of the base station 200. Then, the base station 300 performs configuration processing for the mobile object 100 to start data communication, before the mobile object 100 starts mobile communication with the base station 200. Thus, the configuration processing for the mobile object 100 to start data communication has already been performed by the base station 300 at the timing when the mobile object 100 starts mobile communication with the base station 200, and accordingly, in the system 10 pertaining to the present embodiment, the mobile object can start data communication, in a short time, using a radio wave with a frequency in the terahertz band. In addition, when the mobile object 100 is located at a position which is inside the coverage area 220 of the base station 200 and inside the coverage area 320 of the base station 300, the mobile object 100 can perform data communication using both the mobile communication between the mobile object 100 and the base station 200 and the mobile communication between the mobile object 100 and the base station 300, and accordingly, the system 10 pertaining to the present embodiment can achieve high-velocity data communication of the mobile object as a whole system. In addition, when the mobile object 100 moves from inside the coverage area 220 of the base station 200 to outside the coverage area 220 of the base station 200, the mobile object 100 can continue the data communication using the mobile communication between the mobile object 100 and the base station 300, and accordingly, the system 10 pertaining to the present embodiment can achieve seamless data communication of the mobile object as a whole system.

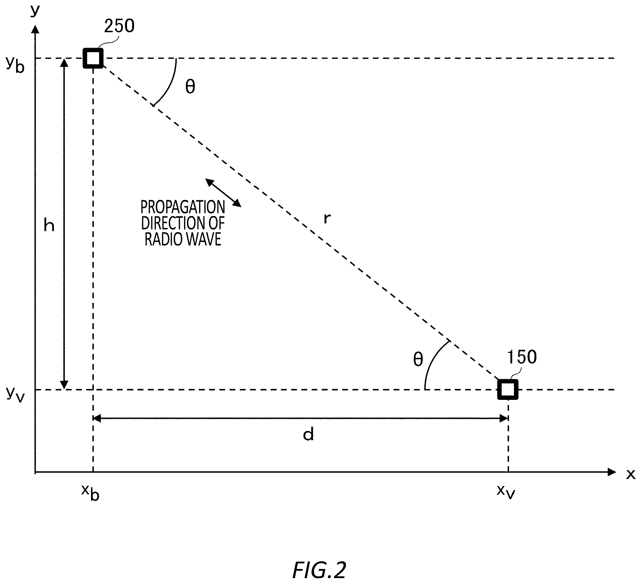

Fig. 2 is a descriptive illustration of a propagation characteristic of a radio wave. In the xy coordinate system illustrated in Fig. 2, the x-axis is in the horizontal direction and the y-axis is in the vertical direction.

The communication antenna 150 is located at $(x_v, y_v)$. The communication antenna 250 included in the base station 200 is located at $(x_b, y_b)$.

When the communication antenna 150 transmits a radio wave and the communication antenna 250 receives the radio wave, the communication antenna 150 is the one on the transmitting end and the communication antenna 250 is the one on the receiving end. Meanwhile, when the communication antenna 250 transmits a radio wave and the communication antenna 150 receives the radio wave, the communication antenna 250 is the one on the transmitting end and the communication antenna 150 is the one on the receiving end. Note that, the propagation direction of the radio wave is assumed to be in a direction parallel to a straight line running through the communication antenna 150 and the communication antenna 250.

"r" represents a distance between the communication antenna on the transmitting end and the communication antenna on the receiving end. r satisfies the numerical expression below.

$$r=\sqrt{(x_b\text{-}x_v)^2+(y_b\text{-}y_v)^2}$$

"d" represents a distance in the x-axis direction between the communication antenna on the transmitting end and the communication antenna on the receiving end. d satisfies the numerical expression below.

$$d=\sqrt{(x_b\text{-}x_v)^2}$$

"h" represents a height difference between the height of the communication antenna on the transmitting end and the height of the communication antenna on the receiving end. h satisfies the numerical expression below.

$$h=\sqrt{(y_b-y_v)^2}$$

"θ" represents an elevation/depression angle of the radio wave in a propagation direction. When the communication antenna 150 is the one on the transmitting end and the communication antenna 250 is the one on the receiving end, θ represents an elevation angle. Meanwhile, when the communication antenna 250 is the one on the transmitting end and the communication antenna 150 is the one on the receiving end, θ represents a depression angle.

Receiving power of a radio wave ($P_{RE}$) can be derived from the transmitting power of the radio wave ($P_{TR}$) using Friis transmission equation shown below. In Friis transmission equation shown below, $G_{TR}$ represents an antenna gain of the communication antenna on the transmitting end, $G_{RE}$ represents an antenna gain of the communication antenna on the receiving end, and λ represents a wavelength of the radio wave.

$$P_{RE}=P_{TR}\times G_{TR}\times G_{RE}\times\left(\frac{\lambda}{4\pi r}\right)^2$$

Here, r = h × cosecθ is substituted into Friis transmission equation shown above. In this case, $P_{RE}$ satisfies the numerical expression below.

$$P_{RE}=P_{TR}\times G_{TR}\times G_{RE}\times\left(\frac{\lambda}{4\pi h\cos ec\,\theta}\right)^2$$

As shown by the numerical expression above, $P_{RE}$ includes $(1/cosec\theta)^2$ and when $G_{TR}$ x $G_{RE}$ is proportional to $(cosec\theta)^2$, $P_{RE}$ becomes constant regardless of d. Accordingly, when $G_{TR}$ x $G_{RE}$ is proportional to $(cosec\theta)^2$, the communication quality of mobile communication using a radio wave in the terahertz band can be further stabilized.

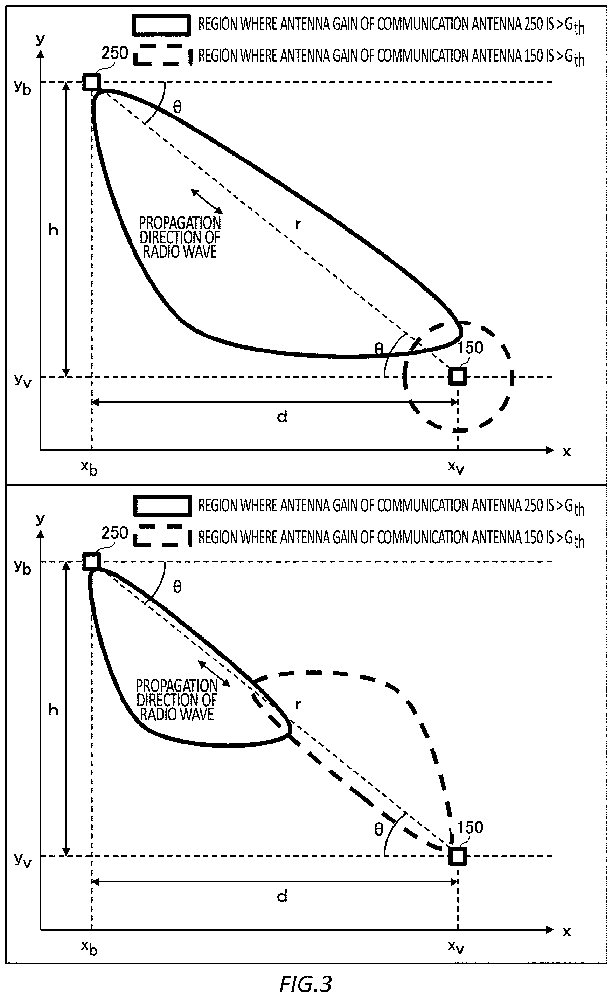

Fig. 3 is a descriptive illustration of an antenna gain of a communication antenna. Fig. 3 illustrates an exemplary region in which the antenna gain of the communication antenna is larger than a gain threshold ($G_{th}$).

The upper section of Fig. 3 illustrates an exemplary case in which the antenna gain of the communication antenna 150 is omnidirectional relative to the elevation/depression angle and the antenna gain of the communication antenna 250 is proportional to the cosecant raised to a power of two of the elevation/depression angle. The lower section of Fig. 3 illustrates an exemplary case in which the antenna gain of the communication antenna 150 is proportional to the cosecant raised to a power of one of the elevation/depression angle and the antenna gain of the communication antenna 250 is proportional to the cosecant raised to a power of one of the elevation/depression angle. As shown in Fig. 3, the region in which the antenna gain of the communication antenna is larger than $G_{th}$ is most widely provided by the communication antenna having the antenna gain that is proportional to the cosecant raised to a power of two of the elevation/depression angle, second most widely provided by the communication antenna having the antenna gain that is proportional to the cosecant raised to a power of one of the elevation/depression angle, and third most widely provided by the communication antenna having the antenna gain that is omnidirectional relative to the elevation/depression angle.

Here, sizes of the communication antenna having the antenna gain that is proportional to the cosecant raised to a power of one of the elevation/depression angle and the communication antenna having the antenna gain that is proportional to the cosecant raised to a power of two of the elevation/depression angle will be described. The size of the communication antenna having the antenna gain that is proportional to the cosecant raised to a power of one of the elevation/depression angle is smaller than the size of the communication antenna having the antenna gain that is proportional to the cosecant raised to a power of two of the elevation/-depression angle. The size of the communication antenna having the antenna gain that is proportional to the cosecant raised to a power of one of the elevation/depression angle is, for example, about 1/2 to 1/3 of the size of the communication antenna having the antenna gain that is proportional to the cosecant raised to a power of two of the elevation/depression angle. The size of the communication antenna having the antenna gain that is proportional to the cosecant raised to a power of one of the elevation/depression angle is, for example, about 1 cm$^3$ to 4 cm$^3$ in the 300 GHz band.

As previously discussed, the size of the communication antenna having the antenna gain that is proportional to the cosecant raised to a power of one of the elevation/depression angle is small. Hence, when the communication antenna having the antenna gain that is proportional to the cosecant raised to a power of one of the elevation/depression angle is employed as the communication antenna 150, the communication antenna 150 can be easily installed in a position where wiring connected to the communication antenna 150 can be hidden or where good visibility relative to the communication antenna 250 is ensured. Moreover, when the communication antenna having the antenna gain that is proportional to the cosecant raised to a power of one of the elevation/depression angle is employed as the communication antenna 250, the communication antenna 250 can be easily installed in a position where it does not block a sight to see the sign, the traffic light, or the like to which the base station 200 is installed. Thus, when the communication antenna having the antenna gain that is proportional to the cosecant raised to a power of one of the elevation/depression angle is employed as the communication antenna 150 and the communication antenna 250, the degree of freedom of the installation position of the communication antenna can be enhanced as a whole system.

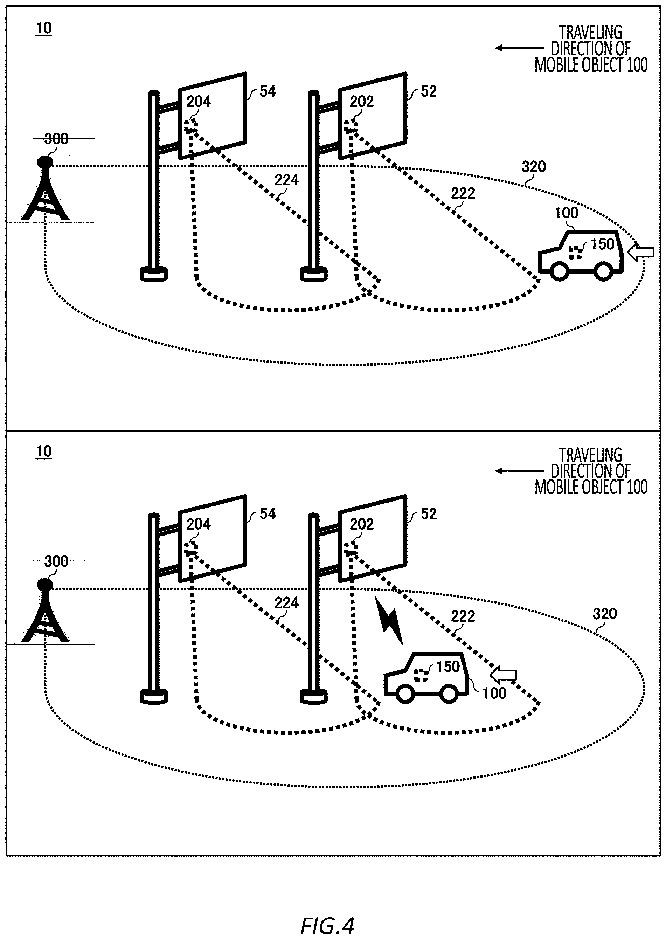

Fig. 4 is a descriptive illustration of an exemplary communication state of the mobile object 100. Hereinafter, a state in which the mobile object 100 has not established mobile communication is defined as a start state. Note that, the base station 202 installed in the sign 52 and the base station 204 installed in the sign 54 are assumed to have similar functionality as the base station 200, and the traveling direction of the mobile object 100 is assumed to be from the right to the left.

The upper section of Fig. 4 illustrates an exemplary case in which the mobile object 100 moves from outside the coverage area 320 of the base station 300 to inside the coverage area 320 of the base station 300. In response to moving from outside the coverage area 320 of the base station 300 to inside the coverage area 320 of the base station 300, for example, the mobile object 100 establishes mobile communication with the base station 300 using a radio wave with a frequency lower than the terahertz band.

The base station 300 may perform configuration processing for the mobile object 100 to start data communication at the timing when it establishes mobile communication with the mobile object 100. In response to the completion of the configuration processing by the base station 300, the mobile object 100 may start data communication between the mobile object 100 and the base station 300 using the mobile communication.

The lower section of Fig. 4 illustrates an exemplary case in which the mobile object 100 moves from outside the coverage area 222 of the base station 202 to inside the coverage area 222 of the base station 202. In response to moving from outside the coverage area 222 of the base station 202 to inside the coverage area 222 of the base station 202, for example, the mobile object 100 establishes mobile communication with the base station 202 using a radio wave with a frequency in the terahertz band. In response to establishing the mobile communication with the base station 202, the mobile object 100 may start data communication using both the mobile communication between the mobile object 100 and the base station 202 and the mobile communication between the mobile object 100 and the base station 300.

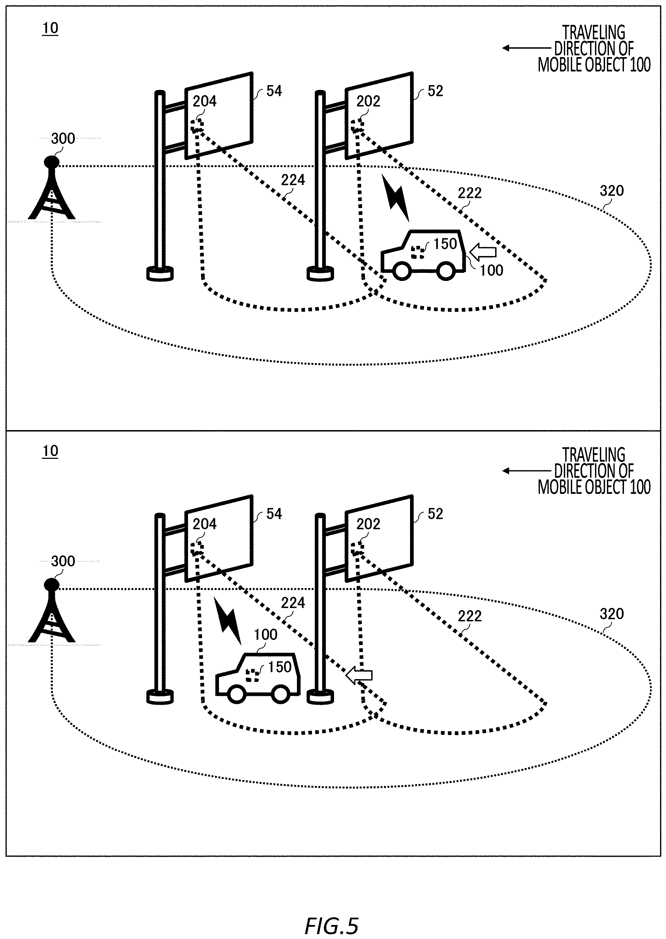

Fig. 5 is a descriptive illustration of another exemplary communication state of the mobile object 100. Hereinafter, differences from the description of Fig. 4 will be mainly described.

The upper section of Fig. 5 illustrates an exemplary case in which the mobile object 100 moves within the coverage area 222 of the base station 202. While the mobile object 100 is located within the coverage area 222 of the base station 202, the mobile object 100 may perform data communication using both the mobile communication between the mobile object 100 and the base station 202 and the mobile communication between the mobile object 100 and the base station 300.

For example, while the mobile object 100 is located within the coverage area 222 of the base station 202, the mobile object 100 transmits positional information indicating a position of the mobile object 100 to the base station 300. Based on the position of the mobile object 100 indicated by the positional information received from the mobile object 100, the base station 300 determines whether to perform handover (HO) of the base station with which the mobile object 100 performs mobile communication using the radio wave with a frequency in the terahertz band from the base station 202 to the base station 204.

For example, when the mobile object 100 is located within the coverage area 222 of the base station 202 and if a distance from the mobile object 100 to the base station 204 is shorter than a predetermined distance threshold, then the base station 300 determines to perform handover from the base station 202 to the base station 204. Meanwhile, when the mobile object 100 is located within the coverage area 222 of the base station 202 and if the distance from the mobile object 100 to the base station 204 is longer than the said predetermined distance threshold, then the base station 300 determines not to perform handover from the base station 202 to the base station 204. Hereinafter, the description continues assuming that the base station 204 has determined to perform handover from the base station 202 to the base station 300.

In response to determining to perform handover from the base station 202 to the base station 204, for example, the base station 300 transmits, to the mobile object 100, an handover instruction to perform handover of the base station with which the mobile object 100 performs mobile communication using the radio wave with a frequency in the terahertz band from the base station 202 to the base station 204. The handover instruction includes handover source information indicating the base station of the handover source, for example. The handover instruction includes handover destination information indicating the base station of the handover destination, for example.

In response to receiving the handover instruction from the base station 300, the mobile object 100 may perform handover of the base station with which the mobile object 100 performs mobile communication using the radio wave with a frequency in the terahertz band from the base station 202 to the base station 204. Hereinafter, the description continues assuming that handover of the base station with which the mobile object 100 performs the mobile communication using the radio wave with a frequency in the terahertz band has been performed from the base station 202 to the base station 204.

The lower section of Fig. 5 illustrates an exemplary case in which the mobile object 100 moves from outside the coverage area 224 of the base station 204 to inside the coverage area 224 of the base station 204. In response to the mobile object 100 moving from outside the coverage area 224 of the base station 204, which is the handover destination, to inside the coverage area 224 of the base station 204, the mobile object 100 may start data communication using both the mobile communication between the mobile object 100 and the base station 204 and the mobile communication between the mobile object 100 and the base station 300.

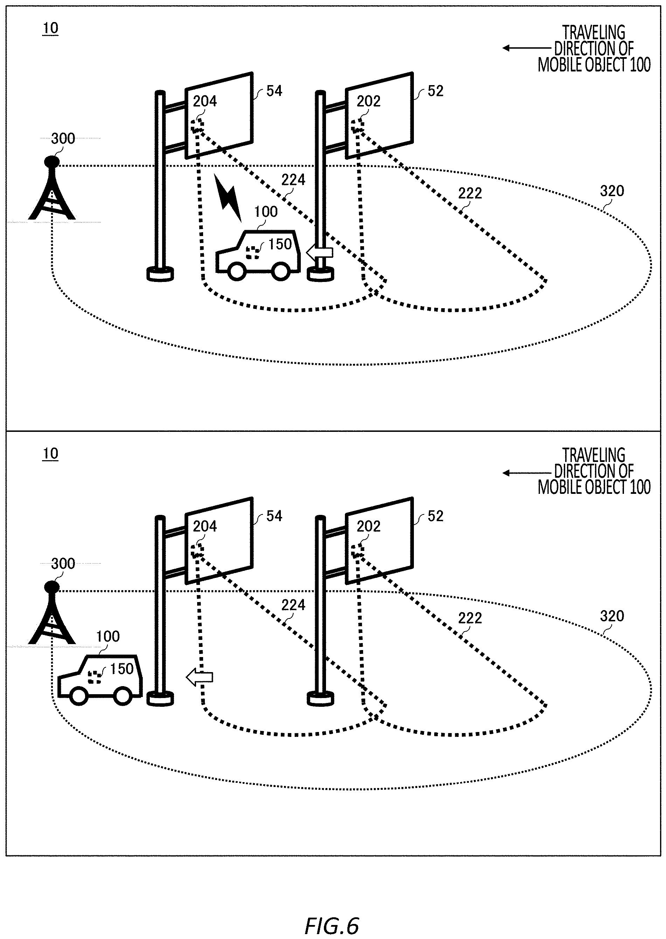

Fig. 6 is a descriptive illustration of another exemplary communication state of the mobile object 100. Hereinafter, differences from the description of Fig. 4 and the description of Fig. 5 will be mainly described.

The upper section of Fig. 6 illustrates an exemplary case in which the mobile object 100 moves within the coverage area 224 of the base station 204. While the mobile object 100 is located within the coverage area 224 of the base station 204, the mobile object 100 may perform data communication using both the mobile communication between the mobile object 100 and the base station 204 and the mobile communication between the mobile object 100 and the base station 300.

For example, while the mobile object 100 is located within the coverage area 224 of the base station 204, the mobile object 100 transmits positional information to the base station 300. Based on the position of the mobile object 100 indicated by the positional information received from the mobile object 100, the base station 300 determines whether to perform handover of the base station with which the mobile object 100 performs mobile communication using the radio wave with a frequency in the terahertz band from the base station 204 to another base station.

For example, when the mobile object 100 is located within the coverage area 224 of the base station 204 and if there is another base station to which the distance from the mobile object 100 is shorter than a predetermined distance threshold, then the base station 300 determines to perform handover from the base station 204 to another base station. Meanwhile, when the mobile object 100 is located within the coverage area 224 of the base station 204 and if there is no other base station to which the distance from the mobile object 100 is shorter than the said distance threshold, then the base station 300 determines not to perform handover from the base station 204 to another base station. Hereinafter, the description continues assuming that the base station 300 has determined not to perform handover from the base station 204 to another base station.

The lower section of Fig. 6 illustrates an exemplary case in which the mobile object 100 moves from inside the coverage area 224 of the base station 204 to outside the coverage area 224 of the base station 204. In response to the mobile object 100 moving from inside the coverage area 224 of the base station 204 to outside the coverage area 224 of the base station 204, the mobile object 100 may start data communication using the mobile communication between the mobile object 100 and the base station 300.

According to the system 10 pertaining to Figs 4 to 6, when the mobile object 100 is located within the coverage area 320 of the base station 300 and when the mobile object 100 is located within at least one of the coverage area 222 of the base station 202 or the coverage area 224 of the base station 204, then the mobile object 100 may perform data communication using both the mobile communication between the mobile object 100 and the base station 202 or the base station 204 and the mobile communication between the mobile object 100 and the base station 300. Meanwhile, when the mobile object 100 is located within the coverage area 320 of the base station 300 and when the mobile object 100 is not located within the coverage area 222 of the base station 202 nor within the coverage area 224 of the base station 204, then the mobile object 100 may perform data communication using the mobile communication between the mobile object 100 and the base station 300. Thus, the system 10 pertaining to Figs 4 to 6 can achieve a high-velocity and seamless data communication of the mobile object as a whole system.

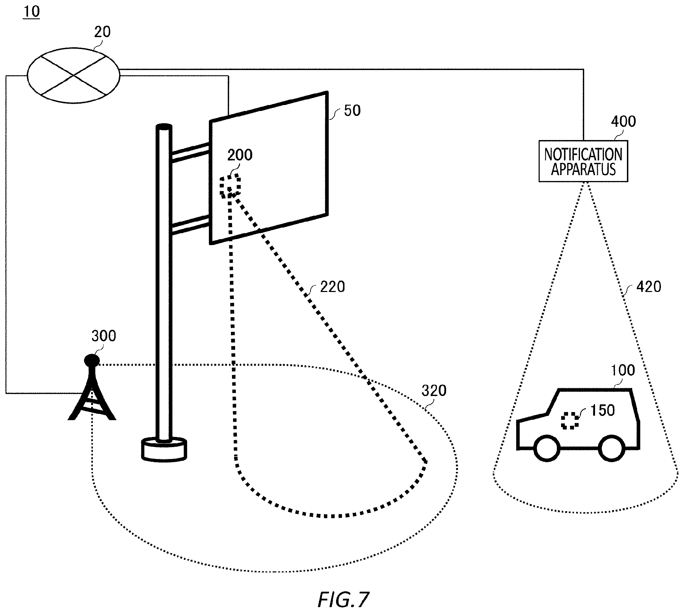

Fig. 7 schematically shows another example of the system 10. Hereinafter, differences from the system 10 illustrated in Fig. 1 will be mainly described.

The system 10 may further include a notification apparatus 400. The notification apparatus 400 notifies the mobile object 100 of the presence of the base station 200 in the vicinity.

The notification apparatus 400 forms the coverage area 420 using a communication antenna, for example. The notification apparatus 400 forms the coverage area 420 along a road, for example. The notification apparatus 400 forms the coverage area 420 along a railroad track, for example. The notification apparatus 400 may form a linear coverage area 420.

The notification apparatus 400 notifies the mobile object 100 of the presence of the base station 200 in the vicinity by transmitting, to the mobile object 100, presence information indicating that the base station 200 is present within a predetermined range from the notification apparatus 400, for example. The presence information includes communication antenna information of the base station 200, for example.

The notification apparatus 400 transmits the presence information to the mobile object 100 using the radio wave with a frequency in the terahertz band, for example. The notification apparatus 400 may transmit the presence information to the mobile object 100 using the radio wave with a frequency lower than the terahertz band.

For example, the mobile object 100 receives the presence information from the notification apparatus 400 and performs mobile communication with the base station 200 based on the received presence information. In order to establish mobile communication with the base station 200, the mobile object 100 puts the communication antenna 150 into a state in which it can receive a radio wave, for example.

The notification apparatus 400 may be connected to the network 20. The notification apparatus 400 may not be connected to the network 20.

The notification apparatus 400 is arranged outside the coverage area 220 of the base station 200, for example. The notification apparatus 400 is arranged outside the coverage area 320 of the base station 300, for example.

According to the system 10 pertaining to Fig. 7, in response to receiving the presence information from the notification apparatus 400, the mobile object 100 puts the communication antenna 150 into a state in which it can receive a radio wave. Thus, the mobile object 100 can put the communication antenna 150 into a state in which it can receive a radio wave before moving from outside the coverage area 220 of the base station 200 to inside the coverage area 220 of the base station 200, and accordingly, the system 10 pertaining to Fig. 7 can establish, in a faster manner, mobile communication using a radio wave in the terahertz band between the mobile object and the base station. Moreover, when the notification apparatus 400 forms the coverage area 420 along a road or a railroad track, the system 10 pertaining to Fig. 7 can prevent the notification apparatus from notifying a communication terminal or a mobile object located around the road or the railroad track, and as a result, unnecessary power consumption in the communication terminal or the mobile object located around the road or the railroad track can be prevented.

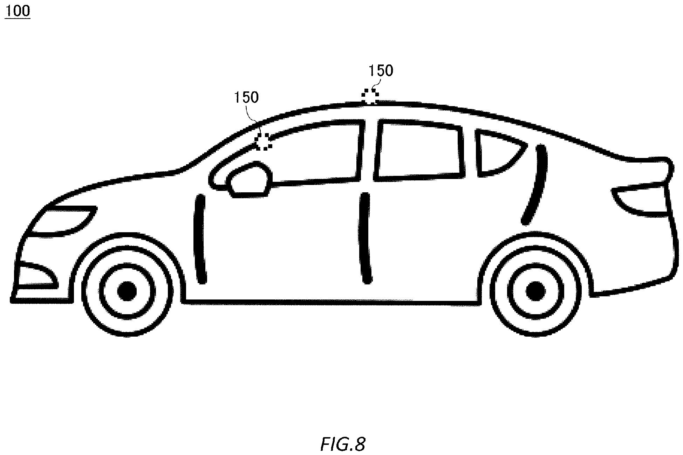

Fig. 8 is a descriptive illustration of an exemplary installation position of the communication antenna 150. Fig. 8 illustrates an exemplary installation position of the communication antenna 150 when the mobile object 100 is an automobile.

The communication antenna 150 is installed in a position where wiring connected to the communication antenna 150 can be hidden, for example. The communication antenna 150 is installed in a position where good visibility relative to the communication antenna 250 is ensured, for example. The communication antenna 150 is installed in a position where wiring connected to the communication antenna 150 can be hidden and where good visibility relative to the communication antenna 250 is ensured, for example.

As to an exemplary installation position of the communication antenna 150 illustrated in Fig. 8, the communication antenna 150 is installed on the back side of the rearview mirror or in a shark fin antenna. The communication antenna 150 may be installed in any other position of the mobile object 100.

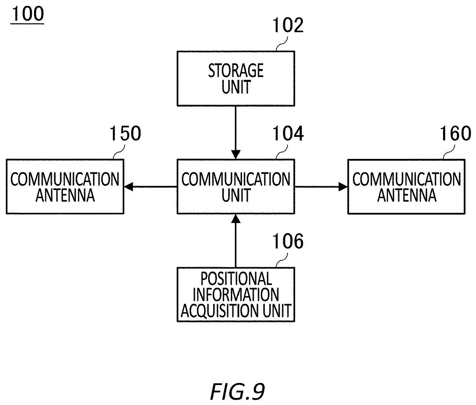

FIG. 9 schematically shows an exemplary functional configuration of the mobile object 100. The mobile object 100 includes a storage unit 102, a communication unit 104, a positional information acquisition unit 106, the communication antenna 150, and the communication antenna 160. Note that, it is not necessary that the mobile object 100 includes all of these components.

The storage unit 102 stores various types of information. The storage unit 102 stores communication antenna information indicating a communication antenna included in the mobile object 100, for example.

The communication unit 104 performs mobile communication with the base station. The communication unit 104 performs mobile communication with the base station 200 using the communication antenna 150, for example. The communication unit 104 performs mobile communication with the base station 200 using the communication antenna 150, for example, in such a manner that a product of the antenna gain of the communication antenna on the transmitting end and the antenna gain of the communication antenna on the receiving end in mobile communication using the radio wave with a frequency in the terahertz band between the mobile object 100 and the base station 200 is proportional to the cosecant raised to a power of two of the elevation/depression angle of the said radio wave in the propagation direction.

When establishing mobile communication with the base station 200, the communication unit 104 transmits an establishment request to the base station 200, for example. The establishment request includes communication antenna information stored in the storage unit 102, for example.

The communication unit 104 performs mobile communication with the base station 300 using the communication antenna 160, for example. The communication unit 104 performs mobile communication with the base station 300 using a radio wave with a frequency lower than the terahertz band, for example. The communication unit 104 receives the presence information from the base station 300, for example.

The communication unit 104 may perform wireless communication with the notification apparatus 400. The communication unit 104 performs wireless communication with the notification apparatus 400 using the communication antenna 150, for example. The communication unit 104 may perform wireless communication with the notification apparatus 400 using the communication antenna 160. The communication unit 104 receives the presence information from the notification apparatus 400, for example.

The communication unit 104 performs mobile communication with the base station 200 based on the presence information received from the base station 300 or the notification apparatus 400, for example. In order to establish mobile communication with the base station 200, the mobile object 100 puts the communication antenna 150 into a state in which it can receive a radio wave, for example.

Based on the communication antenna information of the base station 200 included in the presence information received from the base station 300 or the notification apparatus 400, the communication unit 104 performs mobile communication with the base station 200, for example. For example, when the antenna gain of the communication antenna 150 is proportional to the cosecant raised to a power of one of the elevation/depression angle of the radio wave in the propagation direction and if the base station 200 includes the communication antenna 250 having the antenna gain that is proportional to the cosecant raised to a power of one of the elevation/depression angle of the radio wave in the propagation direction, then the communication unit 104 puts the communication antenna 150 into a state in which it can receive the radio wave. Meanwhile, when the antenna gain of the communication antenna 150 is proportional to the cosecant raised to a power of one of the elevation/depression angle of the radio wave in the propagation direction and if the base station 200 does not include the communication antenna 250 having the antenna gain that is proportional to the cosecant raised to a power of one of the elevation/depression angle of the radio wave in the propagation direction, then the communication unit 104 does not put the communication antenna 150 into a state in which it can receive the radio wave.

For example, when the antenna gain of the communication antenna 150 is omnidirectional relative to the elevation/depression angle of the radio wave in the propagation direction and if the base station 200 includes the communication antenna 250 having the antenna gain that is proportional to the cosecant raised to a power of two of the elevation/depression angle of the radio wave in the propagation direction, then the mobile object 100 puts the communication antenna 150 into a state in which it can receive the radio wave. Meanwhile, when the antenna gain of the communication antenna 150 is omnidirectional relative to the elevation/depression angle of the radio wave in the propagation direction and if the base station 200 does not include the communication antenna 250 having the antenna gain that is proportional to the cosecant raised to a power of two of the elevation/depression angle of the radio wave in the propagation direction, then the mobile object 100 does not put the communication antenna 150 into a state in which it can receive the radio wave.

The positional information acquisition unit 106 acquires the positional information of the mobile object 100. The positional information acquisition unit 106 acquires the positional information using the GNSS (Global Navigation Satellite System) functionality, for example. The positional information acquisition unit 106 acquires the positional information using the GPS (Global Positioning System) functionality, for example. The positional information acquisition unit 106 may acquire the positional information using the RTK (Real Time Kinematic) functionality.

The positional information acquisition unit 106 acquires the positional information while the mobile object 100 is located within the coverage area 220 of the base station 200, for example. The communication unit 104 may transmit, to the base station 300, the positional information acquired while the mobile object 100 is located within the coverage area 220 of the base station 200.

The communication unit 104 receives the handover instruction from the base station 300, for example. In response to receiving the handover instruction from the base station 300, the communication unit 104 may perform handover of the base station with which the mobile object 100 performs mobile communication using the radio wave with a frequency in the terahertz band from the base station of the handover source to the base station of the handover destination.

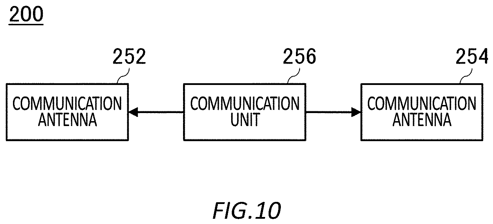

FIG. 10 schematically shows an exemplary functional configuration of the base station 200. The base station 200 includes a communication antenna 252, a communication antenna 254, and a communication unit 256. Note that, it is not necessary that the base station 200 includes all of these components.

The communication antenna 252 may have an antenna gain that is proportional to the cosecant raised to a power of one of the elevation/depression angle of the radio wave, in the propagation direction, with a frequency in the terahertz band. The communication antenna 254 may have an antenna gain that is proportional to the cosecant raised to a power of two of the elevation/depression angle of the radio wave, in the propagation direction, with a frequency in the terahertz band.

The communication unit 256 performs mobile communication with the mobile object 100. The communication unit 256 performs mobile communication with the mobile object 100 using the communication antenna 252, for example. The communication unit 256 performs mobile communication with the mobile object 100 using the communication antenna 254, for example. The communication unit 256 performs mobile communication with the mobile object 100 using the communication antenna 252 or the communication antenna 254, for example, in such a manner that a product of the antenna gain of the communication antenna on the transmitting end and the antenna gain of the communication antenna on the receiving end in mobile communication using the radio wave with a frequency in the terahertz band between the mobile object 100 and the base station 200 is proportional to the cosecant raised to a power of two of the elevation/depression angle of the said radio wave in the propagation direction.

Based on the communication antenna information of the mobile object 100 included in the establishment request received from the mobile object 100, the communication unit 256 performs mobile communication with the mobile object 100. For example, if the mobile object 100 includes communication antenna 150 having the antenna gain that is proportional to the cosecant raised to a power of one of the elevation/depression angle of the radio wave in the propagation direction, then the communication unit 256 performs mobile communication with the mobile object 100 using the communication antenna 252. For example, if the mobile object 100 includes the communication antenna 150 having the antenna gain that is omnidirectional relative to the elevation/depression angle of the radio wave in the propagation direction, then the communication unit 256 performs mobile communication with the mobile object 100 using the communication antenna 254.

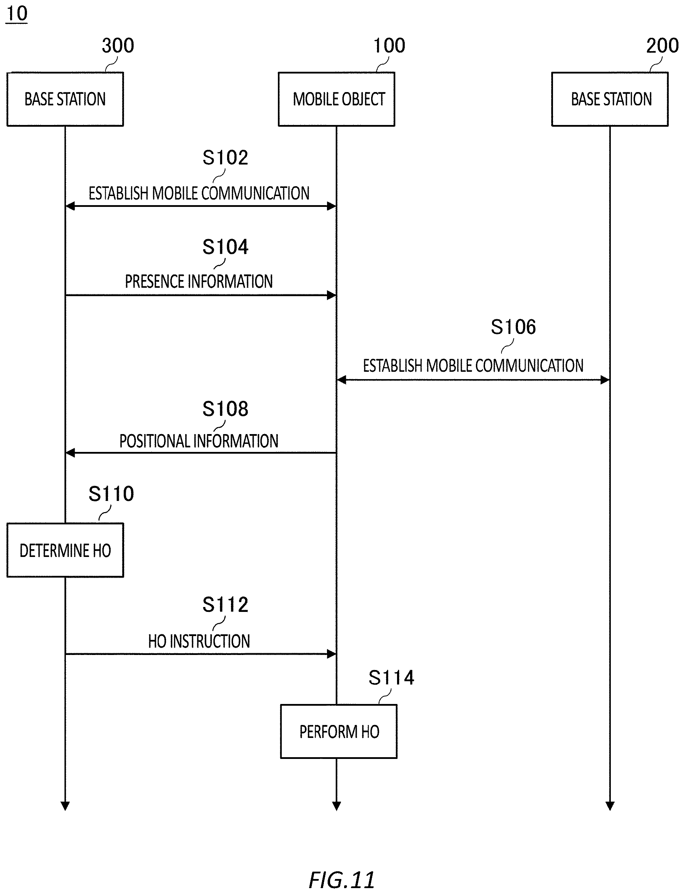

Fig. 11 is a descriptive illustration of an exemplary processing flow of the system 10. Hereinafter, a state in which the mobile object 100 has not established mobile communication is defined as a start state.

In step 102 ("step" may be abbreviated to "S"), in response to the mobile object 100 moving from outside the coverage area 320 of the base station 300 to inside the coverage area 320 of the base station 300, the communication unit 104 establishes mobile communication with the base station 300 using the communication antenna 160. In S104, in response to establishing mobile communication with the mobile object 100 in S102, the base station 300 transmits the presence information to the mobile object 100.

In S106, based on the presence information received from the base station 300 in S104, the communication unit 104 establishes mobile communication with the base station 200 using the communication antenna 150. The mobile object 100 establishes the mobile communication with the base station 200 using the communication antenna 150 in response to the mobile object 100 moving from outside the coverage area 220 of the base station 200 to inside the coverage area 220 of the base station 200. In response to establishing the mobile communication, the mobile object 100 and the base station 200 start the mobile communication in such a manner that a product of the antenna gain of the communication antenna on the transmitting end and the antenna gain of the communication antenna on the receiving end in the mobile communication using the radio wave with a frequency in the terahertz band between the mobile object 100 and the base station 200 is proportional to the cosecant raised to a power of two of the elevation/depression angle of the said radio wave in the propagation direction.

In S108, in response to establishing the mobile communication with the base station 200, the communication unit 104 transmits, to the base station 300, the positional information of the mobile object 100 acquired by the positional information acquisition unit 106. In S110, based on the positional information received from the mobile object 100 in S108, the base station 300 determines whether to perform handover of the base station with which the mobile object 100 performs mobile communication using the radio wave with a frequency in the terahertz band from the base station 200 to another base station. Hereinafter, the description continues assuming that the base station 300 has determined to perform handover from the base station 200 to another base station.

In 5112, the base station 300 transmits the handover instruction to the mobile object 100. In 5114, based on the handover instruction received from the base station 300 in S112, the communication unit 104 performs handover of the base station with which the mobile communication using the radio wave with a frequency in the terahertz band is to be performed from the base station 200 to another base station. Subsequently, the mobile communication between the mobile object 100 and the base station 200 ends.

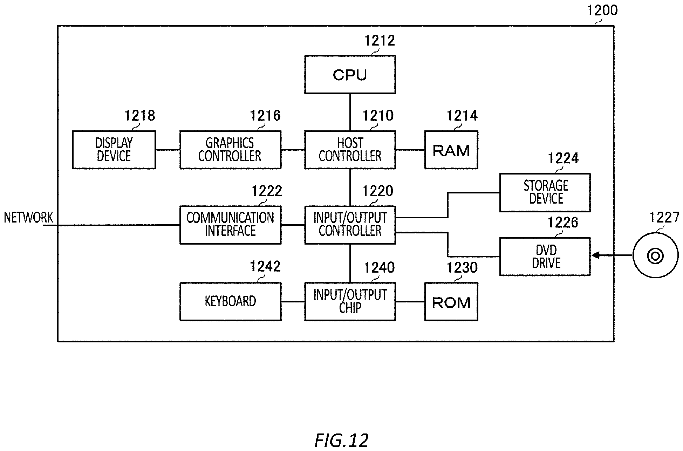

FIG. 12 schematically shows an exemplary hardware configuration of a computer 1200 functioning as the mobile object 100 or the base station 200. Programs installed in the computer 1200 can cause the computer 1200 to function as one or more "units" of the apparatus pertaining to the above-described embodiment or can cause the computer 1200 to execute operations associated with the apparatus pertaining to the above-described embodiment or said one or more "units", and/or can cause the computer 1200 to execute a process pertaining to the above-described embodiment or steps of said process. Such a program may be performed by a CPU 1212 in order to cause the computer 1200 to perform a specified operation associated with some or all of the blocks of the flowchart and the block diagram described in this specification.

The computer 1200 according to the present embodiment includes the CPU 1212, a RAM 1214, and a graphics controller 1216, which are connected to each other via a host controller 1210. The computer 1200 also includes a communication interface 1222, a storage device 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 also includes legacy input/output units such as a ROM 1230 and a keyboard 1242, which are connected to the input/output controller 1220 through an input/output chip 1240.

The CPU 1212 operates in accordance with the programs stored in the ROM 1230 and the RAM 1214, thereby controlling each unit. The graphics controller 1216 obtains image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive 1226 is configured to read the programs or the data from the DVD-ROM 1227 or the like, and to provide the storage device 1224 with the programs or the data. The IC card drive reads programs and data from an IC card and/or writes programs and data into the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer-readable storage medium such as the DVD-ROM 1227 or the IC card. The program is read from the computer-readable storage medium, installed into the storage device 1224, RAM 1214, or ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM 1227, or the IC card, and transmits the read transmission data to a network or writes reception data received from a network to a reception buffer region or the like provided on the recording medium.

In addition, the CPU 1212 may be configured to cause all or a necessary portion of a file or a database, which has been stored in an external recording medium such as the storage device 1224, the DVD drive 1226 (DVD-ROM 1227), the IC card and the like, to be read into the RAM 1214, thereby executing various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby obtaining the attribute value of the second attribute associated with the first attribute that satisfies a predetermined condition.

The programs or software module described above may be stored on the computer 1200 or in a computer-readable storage medium near the computer 1200. In addition, a recording medium such as a hard disk or a RAM provided in a server system connected to a dedicated communication network or the Internet can be used as the computer-readable storage medium, thereby providing the program to the computer 1200 via the network.

Blocks in flowcharts and block diagrams in the present embodiments may represent stages of processes in which operations are executed or "units" of apparatuses responsible for executing operations. A specific stage and "unit" may be implemented by dedicated circuit, programmable circuit supplied along with a computer-readable instruction stored on a computer-readable storage medium, and/or a processor supplied along with the computer-readable instruction stored on the computer-readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer-readable storage medium may include any tangible device capable of storing an instruction executed by an appropriate device, so that the computer-readable storage medium having the instruction stored thereon constitutes a product including an instruction that may be executed in order to provide means for executing an operation designated by a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer-readable instructions may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, or the like, and a conventional procedural programming language such as a "C" programming language or a similar programming language.

The computer-readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer-readable instruction to generate means for executing operations designated by the flowchart or the block diagram. Examples of the processor include a computer processor, a processing unit, a microprocessor, a digital signal processor, a controller, a microcontroller, and the like.

While the present invention has been described with the embodiments, the technical scope of the present invention is not limited to the above-described embodiments. It is apparent to persons skilled in the art that various alterations or improvements can be added to the above-described embodiments. It is also apparent from the descriptions of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

10: system, 20: network, 50: sign, 52: sign, 54: sign, 100: mobile object, 102: storage unit, 104: communication unit, 106: positional information acquisition unit, 150: communication antenna, 200: base station, 202: base station, 204: base station, 220: coverage area, 222: coverage area, 224: coverage area, 250: communication antenna, 252: communication antenna, 254: communication antenna, 256: communication unit, 300: base station, 320: coverage area, 400: notification apparatus, 420: coverage area, 1200: computer, 1210: host controller, 1212: CPU, 1214: RAM, 1216: graphics controller, 1218: display device, 1220: input/output controller, 1222: communication interface, 1224: storage device, 1226: DVD drive, 1227: DVD-ROM, 1230: ROM, 1240: input/output chip, 1242: keyboard.

**Claims**

1. A communication system (10), comprising:

   a mobile object (100); and
   a first base station (200), wherein
   the mobile object (100) and the first base station (200) performs mobile communication in such a manner that a product of an antenna gain of a communication antenna on a transmitting end and an antenna gain of a communication antenna on a receiving end in mobile communication using a radio wave with a frequency in a terahertz band between the mobile object (100) and the first base station (200) is proportional to a cosecant raised to a power of two of an elevation/depression angle of the radio wave in a propagation direction.

2. The communication system (10) according to claim 1, wherein
   a receiving power ($P_{RE}$) of the radio wave satisfies a following numerical expression:

$$P_{RE} = P_{TR} \times G_{TR} \times G_{RE} \times \left( \frac{\lambda}{4\pi h \cosec \theta} \right)^2$$

   wherein $P_{TR}$ represents a transmitting power of the radio wave, $G_{TR}$ represents the antenna gain of the communication antenna on a transmitting end, $G_{RE}$ represents the antenna gain of the communication antenna on a receiving end, $\lambda$ represents a wavelength of the radio wave, h represents a height difference between a height of the communication antenna on a transmitting end and a height of the communication antenna on a receiving end, and $\theta$ represents the elevation/depression angle.

3. The communication system (10) according to claim 1 or 2, wherein

   the mobile object (100) includes a first communication antenna having an antenna gain that is proportional to a cosecant raised to a power of one of the elevation/depression angle, and
   the first base station (200) includes a second communication antenna having an antenna gain that is proportional to a cosecant raised to a power of one of the elevation/depression angle.

4. The communication system (10) according to claim 1 or 2, wherein

the mobile object (100) includes a first communication antenna having an antenna gain that is omnidirectional relative to the elevation/depression angle, and
the first base station (200) includes a second communication antenna having an antenna gain that is proportional to a cosecant raised to a power of two of the elevation/depression angle.

5. The communication system (10) according to any one of claims 1 to 4, wherein
the mobile object (100) performs mobile communication, using a radio wave with a frequency lower than a terahertz band, with a second base station (300) having a coverage area that encompasses a coverage area of the first base station (200), receives, from the second base station (300), first presence information indicating that the first base station (200) is present within the coverage area of the second base station (300), and performs mobile communication with the first base station (200) based on the first presence information.

6. The communication system (10) according to any one of claims 1 to 5, further comprising:

a notification apparatus (400), wherein
the notification apparatus is arranged outside a coverage area of the first base station (200) and transmits, to the mobile object (100) by using a radio wave with a frequency in a terahertz band, second presence information indicating that the first base station (200) is present within a predetermined range from the notification apparatus, and
the mobile object (100) performs mobile communication with the first base station (200) based on the second presence information.

7. A mobile object (100), comprising:

a communication antenna (150) used for mobile communication between the mobile object (100) and a base station (200); and
a communication unit (104) that performs mobile communication with the base station (200) by using the communication antenna (150) included in the mobile object (100) in such a manner that a product of an antenna gain of a communication antenna on a transmitting end and an antenna gain of a communication antenna on a receiving end in mobile communication using a radio wave with a frequency in a terahertz band between the mobile object (100) and the base station (200) is proportional to a cosecant raised to a power of two of an elevation/-depression angle of the radio wave in a propagation direction.

8. The mobile object (100) according to claim 7, wherein
an antenna gain of the communication antenna (150) included in the mobile object (100) is proportional to a cosecant raised to a power of one of the elevation/-depression angle.

9. A program which, when executed by a computer, causes the computer to function as the mobile object (100) according to claim 7 or 8.

10. A base station (200), comprising:

a communication antenna (252, 254) used for mobile communication between a mobile object (100) and the base station (200); and
a communication unit (256) that performs mobile communication with the mobile object (100) by using the communication antenna (252, 254) included in the base station (200) in such a manner that a product of an antenna gain of a communication antenna on a transmitting end and an antenna gain of a communication antenna on a receiving end in mobile communication using a radio wave with a frequency in a terahertz band between the mobile object (100) and the base station (200) is proportional to a cosecant raised to a power of two of an elevation/-depression angle of the radio wave in a propagation direction.

11. The base station (200) according to claim 10, wherein
an antenna gain of the communication antenna (252) included in the base station (200) is proportional to a cosecant raised to a power of one of the elevation/-depression angle.

12. A program which, when executed by a computer, causes the computer to function as the base station (200) according to claim 10 or 11.

*FIG.1*

*FIG.2*

FIG.3

FIG.4

FIG.5

FIG.6

FIG.7

100

FIG.8

<u>100</u>

102

STORAGE
UNIT

150

104

160

COMMUNICATION
ANTENNA

COMMUNICATION
UNIT

COMMUNICATION
ANTENNA

106

POSITIONAL
INFORMATION
ACQUISITION UNIT

*FIG.9*

<u>200</u>

252        256        254

| COMMUNICATION ANTENNA | ← | COMMUNICATION UNIT | → | COMMUNICATION ANTENNA |

*FIG.10*

*FIG.11*

1200

1212

CPU

1218          1216          1210          1214

DISPLAY         GRAPHICS        HOST          RAM
DEVICE         CONTROLLER      CONTROLLER

                                             1224

                1222          1220          STORAGE
                                             DEVICE

NETWORK        COMMUNICATION   INPUT/OUTPUT    1226
               INTERFACE       CONTROLLER
                                             DVD       1227
                                             DRIVE

1242          1240          1230

KEYBOARD        INPUT/OUTPUT     ROM
                CHIP

*FIG.12*

Europäisches
Patentamt

European
Patent Office

Office européen
des brevets

# EUROPEAN SEARCH REPORT

**Application Number**

EP 24 22 1960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PUSKELY JAN ET AL: "5G SIW-Based Phased Antenna Array With Cosecant-Squared Shaped Pattern", IEEE TRANSACTIONS ON ANTENNAS AND PROPAGATION, IEEE, USA, vol. 70, no. 1, 26 July 2021 (2021-07-26), pages 250-259, XP011897223, ISSN: 0018-926X, DOI: 10.1109/TAP.2021.3098577 [retrieved on 2022-01-10] * sections I, V * | 1,2,4-7, 9,10,12 | INV. H04W16/28 H04W84/00 |
| X | UMABA T ET AL: "Demonstration experiment of millimeter wave multi-gigabit wireless LAN system", RADIO-FREQUENCY INTEGRATION TECHNOLOGY, 2009. RFIT 2009. IEEE INTERNATIONAL SYMPOSIUM ON, IEEE, PISCATAWAY, NJ, USA, 9 January 2009 (2009-01-09), pages 28-31, XP031612674, ISBN: 978-1-4244-5031-2 * see sections II, IV * | 1-3,5-12 | |

TECHNICAL FIELDS
SEARCHED (IPC)

H04W

The present search report has been drawn up for all claims

| Place of search | Date of completion of the search | Examiner |
|---|---|---|
| The Hague | 8 May 2025 | Tejera, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 580 238 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3761821 B